# EUROPÄISCHE PATENTSCHRIFT

(11) **EP 1 264 497 B1**
(45) Veröffentlichungstag und Bekanntmachung des Hinweises auf die Patenterteilung: **24.04.2013**
(21) Anmeldenummer: 01913649.8
(22) Anmeldetag: 16.02.2001
(51) Int. Cl.: H04L 29/06, H04L 29/08

(54) **VERFAHREN ZUR ÜBERTRAGUNG VON INFORMATIONEN ÜBER EIN FUNKNETZ**
METHOD FOR TRANSMITTING INFORMATION OVER A RADIO NETWORK
PROCEDE POUR TRANSMETTRE DES INFORMATIONS PAR L'INTERMEDIAIRE D'UN RESEAU RADIOTELEPHONIQUE

(30) Priorität: 07.03.2000 DE 10010965
(43) Veröffentlichungstag der Anmeldung: 11.12.2002
(73) Patentinhaber: ROBERT BOSCH GMBH, 70442 Stuttgart (DE)
(72) Erfinder: WAWRA, Martin, 40470 Düsseldorf (DE)
(86) Internationale Anmeldenummer: PCT/DE2001/000573
(87) Internationale Veröffentlichungsnummer: WO 2001/067703

(56) Entgegenhaltungen:
- US-A- 5 870 030
- ANDREAS FASBENDER, FRANK REICHERT: "Any Network, Any Terminal, Anywhere" IEEE PERSONAL COMMUNICATIONS, 1. April 1999 (1999-04-01), Seiten 22-30, XP002178466
- "DIGITAL CELLULAR TELECOMMUNICATIONS SYSTEM (PHASE 2+);MOBILE STATION EXECUTION ENVIRONMENT (MExE);SERVICE DESCRIPTION; Stage 1 (GSM 02.57 version 7.1.0 Release 1998) ETSI TS 101 741 v7.1.0" EUROPEAN TELECOMMUNICATION STANDARD, XX, XX, August 1999 (1999-08), Seiten 1-21, XP002145174

## Beschreibung

### Stand der Technik

Die Erfindung geht aus von einem Verfahren zur Übertragung von Informationen über ein Funknetz und zur Darstellung der Informationen mittels einer mobilen Sende-/Empfangsstation und von einem Datenträger nach der Gattung der unabhängigen Patentansprüche.

Es ist bereits bekannt, dass WAP (Wireless Application Protocol) zum Laden von Internetseiten für mobile Terminals verwendet wird. Zu solchen mobilen Terminals gehören insbesondere Mobiltelefone. Mobiltelefone weisen weniger leistungsfähigere Prozessoren, weniger Speicher, eine beschränkte Stromversorgung, kleinere Anzeigen und keine ausgewachsene Tastatur im Vergleich zu Computern auf. Darüber hinaus weist das Funknetz eine geringere Bandbreite als vergleichbare Festnetze auf. Auch die Verbindungsstabilität ist geringer im Vergleich zu Festnetzen, so dass die Daten für WAP in ein reduziertes Datenformat umformatiert werden. Dafür werden die Multimediainhalte der Internetseiten für WAP übersetzt und dabei Daten reduziert. Die Mobiltelefone weisen einen Microbrowser auf, der zum Betrachten dieser WAP-Seiten geeignet ist.

Aus A. Fasbender et al: Any Network, any Terminal, anywhere, IEEE Personal Communications April 1999, Seite 22 bis 30 ist es bekannt, von einem intelligenten Gateway zu einer Mobilstation nur eine für diese Mobilstation geeignete Skalierung einer angefragten Information zu übertragen.

### Vorteile der Erfindung

Das erfindungsgemäße Verfahren zur Übertragung von Informationen über ein Funknetz und zur Darstellung der Informationen mittels einer mobilen Sende-/Empfangsstation sowie der Datenträger haben demgegenüber den Vorteil, dass die Informationen in verschiedenen Skalierungen angeboten werden, so dass je nach vorhandenen Darstellungsmöglichkeiten eine geeignete Skalierung zur Darstellung mittels der Sende-/Empfangsstation gewählt wird.

Die verschiedenen Skalierungen sind vorteilhafterweise mit einer Markierung versehen, so dass eine jeweilige Skalierung in einfacher Weise ausgewählt wird. Damit wird die Darstellung der Informationen an die Mittel zur Informationsdarstellung des jeweiligen Endgeräts eines Benutzers angepaßt.

Durch die in den abhängigen Ansprüchen aufgeführten Maßnahmen und Weiterbildungen sind vorteilhafte Verbesserungen des in den unabhängigen Patentansprüchen angegebenen Verfahrens bzw. Datenträgers möglich.

Es ist von Vorteil, dass ein Benutzer mittels Eingaben an seiner Sende-/Empfangsstation selbständig Skalierungen auswählt. Dabei wird er vorteilhafterweise Skalierungen auswählen, die weniger Umfang aufweisen, als es seine mobile Sende-/Empfangsstation maximal erlauben würde. Dadurch kann ein Benutzer vorteilhafterweise die Geschwindigkeit der Darstellung und gegebenenfalls die Datenübertragungrate erhöhen, indem er eine Skalierung wählt, die eine weniger aufwendige Darstellung bedeutet und damit weniger Daten zu übertragen sind und die Darstellung mit weniger Daten erzeugt wird.

Weiterhin ist es von Vorteil, dass mittels WAP ein offener Standard für die Übertragung verwendet wird, so dass das erfindungsgemäße Verfahren unabhängig von jeweils verwendeten Endgeräten wird. Dies garantiert eine größere Verbreitung des erfindungsgemäßen Verfahrens.

Darüber hinaus ist es von Vorteil, dass die skalierbaren Informationen WAP-gemäß umformatiert werden, so dass die Daten der Informationen mittels WAP in einfacher Weise übertragen werden.

Schließlich ist es von Vorteil, dass eine Verwendung des erfindungsgemäßen Verfahrens zur Übertragung von Werbung zur Abrechnung von Diensten verwendet wird, da Werbung ein geeignetes Mittel zur Finanzierung von ansonsten kostenlosen Informationsdiensten ist. Darüber hinaus erweitert dies das Kundenspektrum um ein Vielfaches. In einer Weiterbildung ist vorteilhafterweise vorgesehen, dass die Abrechnung der Dienste in Abhängigkeit von der gewählten Skalierung erfolgt. Das heißt, je besser und aufwendiger die Darstellung der Werbung ist, desto mehr Kosten der beanspruchten Dienste werden durch das Betrachten der Werbung übernehmen. Dem liegt zugrunde, dass eine aufwendigere dargestellte Werbung einen Betrachter mehr beeinflußt als einer weniger aufwendig dargestellte Werbung.

### Zeichnung

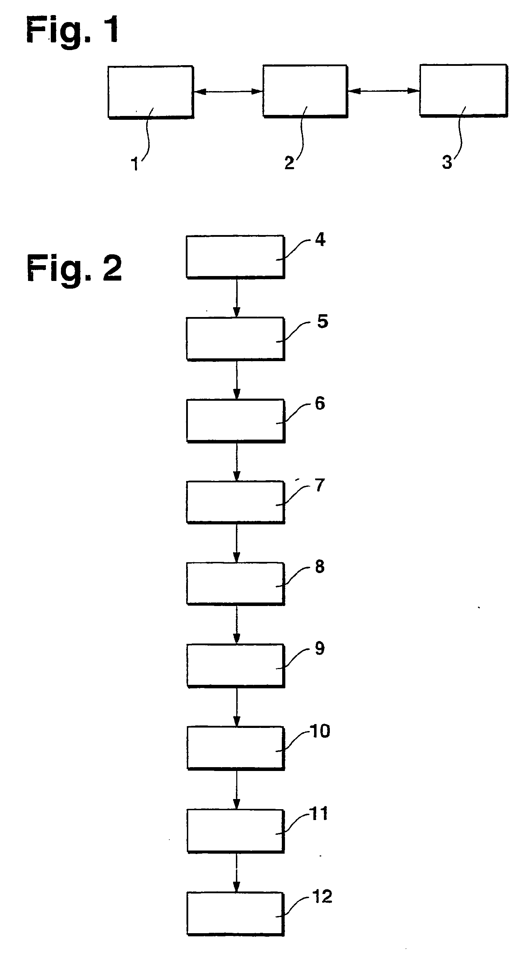

Ausführungsbeispiele der Erfindung sind in der Zeichnung dargestellt und in der Beschreibung näher erläutert. Figur 1 zeigt schematisch einen Zugriff einer mobilen Sende-/Empfangsstation auf Internetseiten und Figur 2 das erfindungsgemäße Verfahren zur Übertragung von Informationen und zur Darstellung der Informationen mittels einer mobilen Sende-/Empfangsstation.

### Beschreibung

Mobile Sende-/Empfangsstationen, wie es Mobiltelefone sind, werden im Hinblick auf ihre Funktionalitäten ständig erweitert. Ein großes Anwendungsgebiet ist der Abruf von Informationen, wie es Personen vom Gebrauch des Internets gewohnt sind. Das Erweitern dieser Funktion betrifft insbesondere die Darstellung von Grafiken, Video und der Ermöglichung von Interaktion mit den dargestellten Informationen. Werbung ist daher insbesondere geeignet, um diese Informationen zu finanzieren. Dies ist von vielen im Internet tätigen Firmen bekannt, die sich nahezu ausschließlich von Werbung finanzieren.

Die Funknetze sind aufgrund ihrer beschränkten Bandbreite nicht geeignet, ganze Internetseiten in für einer einem Benutzer akzeptablen Zeit und Qualität zu übertragen. Auch die Ausstattung und die Mittel zur Informationsdarstellung einer mobilen Sende-/Empfangsstation entsprechen nicht denen eines herkömmlichen Computers. Daher stellt sich die Aufgabe die darzustellenden Daten so zu reduzieren beziehungsweise anzupassen, dass sie sich auf die unterschiedlichen Sende-/Empfangsstationen von den Benutzern unterschiedlich einstellen, um jeweils eine geeignete Darstellungsweise zu erreichen.

Erfindungsgemäß werden daher darzustellende Informationen in verschiedenen Skalierungen angeboten, die je nach den Möglichkeiten der mobilen Sende-/Empfangsstationen zur Darstellung gewählt werden. Diese verschiedene Skalierungen betreffen die Art der Darstellung. Die Skalierungen sind mit Markierungen versehen, so dass die einzelnen Skalierungen anhand dieser Markierungen in einfacher Art und Weise abgerufen werden. In einer Weiterbildung ist vorgesehen, dass ein Benutzer durch Eingaben an seiner mobilen Sende-/Empfangsstation eine für seine mobile Sende-/Empfangsstation zulässige Skalierung auswählt. Weiterhin wird WAP als Übertragungsverfahren der Informationen verwendet, wobei die Informationen dann für die Werbung mittels WAP umformatiert werden.

In Figur 1 ist schematisch ein Zugriff einer mobilen Sende-/Empfangsstation auf Internetseiten dargestellt. Ein WWW (World Wide Web)-Server, also ein Rechner, der den Zugang zu den Informationen des Internets ermöglicht, wird von einem sogenannten WAP-Gateway 2 kontaktiert, da der WAP-Gateway 2 von einer mobilen Sende-/Empfangsstation 3 dahingehend angefragt wurde, Internetseiten zu der mobilen Sende-/Empfangsstation 3 zu übertragen. Ein WAP-Gateway ist ein Rechner und hier die Basisstation, der die Verbindung des Funknetzes zu dem Internet herstellt. Er wirkt also als Übersetzer, wobei er auch die Basisstation für die mobile Sende-/Empfangsstation 3 ist, wobei auch eine Mehrzahl von mobilen Sende-/Empfangsstationen bedient werden können. Findet der WWW-Server 1 die angeforderten Internetinformationen, dann überträgt der WWW-Server 1 diese Informationen an das WAP-Gateway 2. Der WWW-Server 1 überträgt dabei alle vorhandenen Skalierungen der angeforderten Information, insbesondere Werbung. Der WAP-Gateway 2 übersetzt die von dem WWW-Server 1 empfangenen Daten in das WAP-spezifische Format. Die Daten werden dann über ein Funknetz von dem WAP-Gateway 2 mittels einer angeschlossenen Basisstation zu der mobilen Sende-/Empfangsstation 3 übertragen. Die Sende-/Empfangsstation 3 ermittelt dann anhand ihrer vorhandenen Mittel zur Informationsdarstellung bezüglich der Anzeige und der akustischen Wiedergabe, welche Skalierung von den empfangenen Daten für die Darstellung geeignet ist. Diese Skalierung wird dann anhand einer vorhandenen Markierung ausgewählt, um schließlich die empfangenen Informationen auf einer Anzeige und/oder mittels akustischer Wiedergabe zu reproduzieren.

In einer Weiterbildung ist ferner vorgesehen, dass ein Benutzer der mobilen Sende-/Empfangsstation 3 durch Eingaben an seiner mobilen Sende-/Empfangsstation 3 eine Skalierung, die für seine mobile Sende-/Empfangsstation 3 zulässig ist, auswählt. Dies wird dann entweder in der mobilen Sende-/Empfangsstation 3 selbst vorgenommen oder dem WAP-Gateway 2 mitgeteilt. Die Eingaben macht der Benutzer mittels an der mobilen Sende-/Empfangsstation 3 vorhandener Mittel zur Eingabe, hier mittels einer kleinen Tastatur.

In Figur 2 ist das erfindungsgemäße Verfahren zur Übertragung von Informationen, insbesondere Werbung, über ein Funknetz und zur Darstellung von Informationen, insbesondere Werbung, mittels einer mobilen Sende-/Empfangsstation 3 dargestellt. In Verfahrensschritt 4 wird von der mobilen Sende-/Empfangsstation 3 eine Datenanforderung an den WAP-Gateway 2 übertragen, um Informationen abzurufen. Der WAP-Gateway 2 überträgt diese Anforderung dem WWW-Server 1, so dass der WWW-Server 1 die entsprechenden Informationen aus dem Internet abruft. In Verfahrensschritt 5 empfängt der WAP-Gateway 2 von dem WWW-Server 1 die entsprechenden Informationen oder die Rückmeldung, dass die angeforderten Informationen nicht abrufbar sind. Der WAP-Gateway 2 übersetzt dann die empfangenen Daten in ein WAP-gemäßes Datenformat.

In Verfahrensschritt 6 überträgt der WAP-Gateway 2 mittels der angeschlossenen Basisstation die übersetzten Daten zu der mobilen Sende-/Empfangsstation 3, die dann aus den empfangenen Daten die entsprechenden Skalierungen für die darzustellenden Informationen auswählt.

In der folgenden Tabelle 1 ist ein Beispiel gegeben, welche unterschiedlichen Skalierungen vorliegen.

**Tabelle 1:**

| **Markie rung** | **Funktionalität** |
|---|---|
| 1 | Einfarbiger Text |
| 2 | Mehrfarbiger Text |
| 3 | Nur Ton |
| 4 | Schwarzweiße Einzelbilder |
| 5 | Farbige Einzelbilder |
| 6 | Ton und Einzelbilder |
| 7 | Videodatenstrom in QCIF |
| 8 | Videodatenstrom mit Ton in QCIF und 8 kHz Audiobandbreite |
| 9 | Videodatenstrom mit Ton und Text |
| 10 | Videodatenstrom in SVGA |
| 11 | Videodatenstrom mit Ton in SVGA und 96 kHz Audiobandbreite |
| 12 | Animierte dreidimensionale Objekte |
| 13 | Ton, Videodatenströme, dreidimensionale Objekte und Interaktivität |

Tabelle 1 zeigt eine hierarchische Gliederung einer Skalierung von darzustellenden Informationen. Die Hierachie ergibt sich aus der Komplexität der Darstellung der Informationen. QCIF steht für Quarter Common Intermediate Format und repräsentiert einen internationalen Standard für eine Videoanzeigenauflösung, der hauptsächlich für Videokonferenzen verwendet wird. 176 Pixel werden dabei in Gruppen zu 144 Zeilen auf der Anzeige dargestellt. SVGA steht für Super Video Graphics Array und ist ein internationaler Standard für die Auflösung von Computermonitoren. Hier werden 800x600 Pixel auf der Anzeige dargestellt. Durch die unterschiedlichen Anzeigestandards und die unterschiedlichen Audiobandbreiten, zum einen Telefonqualität und zum anderen CD-Qualität, sind je nach Skalierung bedeutende Unterschiede im Datenumfang offensichtlich.

Anhand der Markierung wird die entsprechende Skalierung zur Darstellung der Informationen ausgewählt. Die Funktionalität gibt die Darstellungsmöglichkeit, die in der entsprechenden Skalierung abgespeichert ist dar. Je nach Möglichkeiten der mobilen Sende-/Empfangsstation 3 und/oder des Wunsches des Benutzers wird die entsprechende Skalierung geladen und dargestellt.

Die Markierung 1 bietet eine einfache Darstellung von einfarbigem Text, während die Markierung 13 eine multimediale Darstellung mittels Video, Ton, dreidimensionalen Objekten und Interaktivität für den Benutzer bietet. Tabelle 1 zeigt ein Beispiel für unterschiedliche Skalierungen der Informationen. Alternativ können mehr oder weniger Skalierungen vorgesehen sein, wobei noch weitere Merkmalsunterschiede, beispielsweise in der Auflösung darzustellender Objekte, unterscheidbar sind. Die verschiedenen Skalierungen liegen entweder im Internet bereits vor, oder der WAP-Gateway 2 berechnet aus der im Internet vorliegenden Form die übrigen Skalierungen.

Damit liegt der Datenträger entweder im Internet im WWW-Server 1 vor oder im WAP-Gateway 2 oder in der mobilen Sende-/Empfangsstation 3. Auf dem Datenträger, der vorzugsweise wiederbeschreibbar ist, sind die unterschiedlichen Skalierungen der darzustellenden Informationen abrufbar.

Anstatt einer Sende-/Empfangsstation ist weiterhin eine mobile Empfangsstation, wie es ein Autoradio ist, verwendbar. Hierbei müssen allerdings alle Skalierungen der darzustellenden Informationen der Empfangsstation übertragen werden, die dann gemäß ihrem Mitteln zur Informationsdarstellung (Anzeige, Tonwiedergabe) beziehungsweise gemäß den Benutzereingaben die entsprechende Skalierung zur Darstellung auswählt. Hier wird außer in dem Fall, dass die mobile Sende-/Empfangsstation 3 dem WAP-Gateway 2 etwas signalisiert, auch eine Empfangsstation subsumiert.

Eine Kombination aus einem Autoradio mit einem Empfänger für DAB (Digital Audio Broadcasting) und einem Mobiltelefon erreicht hingegen die volle Funktionalität, da auch ein Rückkanal mittels des Mobiltelefons vorliegt. Vor allem die Kombination eines breitbandigen Empfängers, der DAB-Empfänger, mit einem schmalbandigen Rückkanal, das Mobiltelefon, ist für eine hohe Datenrate sehr attraktiv. DAB ist ein digitales Übertragungsverfahren, das neben digitalen Audioprogrammen auch andere Daten übertragen kann. Verwandt zu DAB sind DVB (Digital Video Broadcasting) und DRM (Digital Radio Mondial), die ebenfalls neben digitalen Rundfunkprogrammen die Möglichkeit bieten, andere Daten zu übertragen.

Einen Informationsinhalt, der besonders für die verschiedenen Skalierungen geeignet ist, ist die Werbung. Die Werbung in Umfang und Gestalt wird hier zur Abrechnung von in Anspruch genommenen Diensten verwendet. Dabei wählt der Benutzer und/oder die vorhandene Informationsdarstellung die entsprechende Skalierung aus. Um so umfangreicher und aufwendiger die Darstellung der Werbung ist, um so mehr Kosten der in Anspruch genommenen Dienste werden durch das Betrachten der Werbung übernommen. Dabei kann auch vorgesehen sein, dass nur die Werbung in verschiedenen Skalierungen vorliegt, während Informationsdienste in einer Skalierung vorliegen oder dass zumindest Werbung und andere Informationen unterschiedlich skalierbar sind.

## Patentansprüche

1. Verfahren zur Übertragung von Informationen über ein Funknetz und zur Darstellung von den Informationen mittels einer mobilen Sende-/Empfangsstation (3), wobei die Informationen über das Funknetz zu der mobilen Sende-/ Empfangsstation (3) übertragen werden, wobei die Informationen von der mobilen Sende-/Empfangsstation (3) multimedial dargestellt wird, wobei die Informationen in unterschiedlichen Skalierungen erzeugt werden, **dadurch gekennzeichnet, dass** die Informationen in den unterschiedlichen Skalierungen angepasst an das Funknetz übertragen werden und dass die Informationen in Abhängigkeit von Mitteln zur Informationsdarstellung der mobilen Sende-/Empfangsstation (3) skaliert und multimedial dargestellt wird, wobei den unterschiedlichen Skalierungen der Informationen eine Markierung zugeordnet wird und je nach den Mitteln zur Informationsdarstellung eine entsprechende Markierung und damit die geeignete Skalierung ausgewählt wird.

2. Verfahren nach Anspruch 1, **dadurch gekennzeichnet, dass** die Mittel zur Informationsdarstellung nach Eingaben des Benutzers die multimediale Darstellung der Informationen bestimmen.

3. Verfahren nach Anspruch 1 oder 2, **dadurch gekennzeichnet, dass** zur Übertragung der Informationen das Wireless Application Protocol (WAP) verwendet wird.

4. Verfahren nach Anspruch 3, **dadurch gekennzeichnet, dass** die Informationen für die Übertragung über das Funknetz mittels WAP umformatiert werden.

5. Verfahren nach einem der vorherigen Ansprüche, **dadurch gekennzeichnet, dass** Werbung als ein Teil der darzustellenden Informationen zur Abrechnung von mittels der mobilen Sende-/Empfangsstation (3) empfangenen Daten verwendet wird.

6. Verfahren nach Anspruch 5, **dadurch gekennzeichnet, dass** die Abrechnung in Abhängigkeit von der gewählten Skalierung erstellt wird.

7. Mobile Empfangs- oder Sende-/Empfangsstation (3) mit Mittel zur Durchführung des Verfahrens nach einem der Ansprüche 1 bis 6.

8. Mobile Empfangs- oder Sende-/Empfangsstation (3) nach Anspruch 7 mit Mitteln zur multimedialen Darstellung von über ein Funknetz übertragenen und empfangenen Informationen, welche Informationen in unterschiedlichen Skalierungen erzeugt und in den unterschiedlichen Skalierungen angepasst an das Funknetz übertragen wurden, wobei den unterschiedlichen Skalierungen der Informationen Markierungen zugeordnet sind, wobei die Empfangs- oder Sende-/Empfangsstation (3) über Mittel zur Auswahl einer Markierung und damit einer geeigneten Skalierung je nach den Mitteln zur Informationsdarstellung verfügt, so dass die multimediale Informationsdarstellung entsprechend der ausgewählten Skalierung erfolgt.

## Claims

1. Method for transmitting information via a radio network and for presenting the information using a mobile transmission/reception station (3), wherein the information is transmitted to the mobile transmission/reception station (3) via the radio network, wherein the information is presented in multimedia form by the mobile transmission/reception station (3), wherein the information is produced using different scalings, **characterized in that** the information is transmitted using the different scalings in a form matched to the radio network and **in that** the information is presented in scaled and multimedia form on the basis of means for information presentation associated with the mobile transmission/reception station (3), wherein the different scalings of the information are assigned a marker, and the means for information presentation are taken as a basis for selecting an appropriate marker and hence the suitable scaling.

2. Method according to Claim 1, **characterized in that** the means for information presentation determine the multimedia presentation of the information on the basis of inputs by the user.

3. Method according to Claim 1 or 2, **characterized in that** the wireless application protocol (WAP) is used for transmitting the information.

4. Method according to Claim 3, **characterized in that** the information is reformatted for the transmission via the radio network by means of WAP.

5. Method according to one of the preceding claims, **characterized in that** advertising as part of the information to be presented is used for billing for data received by means of the mobile transmission/reception station (3).

6. Method according to Claim 5, **characterized in that** the billing is produced on the basis of the chosen scaling.

7. Mobile reception or transmission/reception station (3) having means for carrying out the method according to one of Claims 1 to 6.

8. Mobile reception or transmission/reception station (3) according to Claim 7 having means for the multimedia presentation of information transmitted and received via a radio network, which information has been produced using different scalings and has been transmitted using the different scalings in a form matched to the radio network, wherein the different scalings of the information have associated markers, wherein the reception or transmission/reception station (3) has means for selecting a marker and hence a suitable scaling on the basis of the means for information presentation, with the result that the multimedia information presentation is effected in line with the selected scaling.

## Revendications

1. Procédé de transmission d'informations par un réseau radio et de présentation des informations au moyen d'un poste mobile d'émission-réception (3),
les informations étant transmises par le réseau radio au poste mobile d'émission-réception (3),
les informations étant présentées par des moyens multimédia par le poste mobile d'émission-réception (3),
les informations étant produites à différentes échelles,
**caractérisé en ce que**
les informations sont transmises au réseau radio après avoir été adaptées aux différentes échelles,
**en ce que** les informations sont mises à l'échelle et présentées par des moyens multimédia en fonction de moyens de présentation des informations du poste mobile d'émission-réception (3),
**en ce qu'**un repère est associé aux différentes échelles des informations et
**en ce qu'**un repère correspondant et donc une mise à l'échelle appropriée sont sélectionnés en fonction des moyens de présentation des informations.

2. Procédé selon la revendication 1, **caractérisé en ce que** les moyens de présentation des informations déterminent la présentation multimédia des informations selon des réglages introduits par l'utilisateur.

3. Procédé selon les revendications 1 ou 2, **caractérisé en ce que** la transmission des informations utilise le protocole d'application sans fil ("Wireless Application Protocol" - WAP).

4. Procédé selon la revendication 3, **caractérisé en ce que** les informations sont reformatées en WAP pour la transmission sur le réseau radio.

5. Procédé selon l'une des revendications précédentes, **caractérisé en ce que** de la publicité est utilisée comme partie des informations à présenter, pour le décompte des données reçues au moyen du poste mobile d'émission-réception (3).

6. Procédé selon la revendication 5, **caractérisé en ce que** le décompte est établi en fonction de la mise à l'échelle sélectionnée.

7. Poste mobile d'émission ou d'émission-réception (3) doté de moyens permettant d'exécuter le procédé selon l'une des revendications 1 à 6.

8. Poste mobile d'émission ou d'émission-réception (3) selon la revendication 7, doté de moyens de présentation multimédia d'informations transmises par un réseau radio et reçues,
ces informations étant produites à différentes échelles et étant transmises sur le réseau radio après avoir été adaptées aux différentes échelles,
des repères étant associés aux différentes échelles des informations,
le poste (3) de réception ou d'émission-réception disposant de moyens de sélection d'un repère et donc d'une mise à l'échelle appropriée en fonction des moyens de présentation des informations de telle sorte que la présentation multimédia des informations s'effectue en accord avec la mise à l'échelle sélectionnée.
